(19) Europäisches Patentamt
European Patent Office
Office européen des brevets

(11) **EP 0 900 998 B1**

(12) **EUROPÄISCHE PATENTSCHRIFT**

(45) Veröffentlichungstag und Bekanntmachung des Hinweises auf die Patenterteilung:
**13.10.2004   Patentblatt 2004/42**

(51) Int Cl.⁷: **G01B 7/30**

(21) Anmeldenummer: **98115930.4**

(22) Anmeldetag: **24.08.1998**

(54) **Induktiver Winkelsensor**

Inductive angle sensor

Capteur inductif de position angulaire

(84) Benannte Vertragsstaaten:
**DE ES FR GB IT SE**

(30) Priorität: **05.09.1997   DE 19738839**

(43) Veröffentlichungstag der Anmeldung:
**10.03.1999   Patentblatt 1999/10**

(73) Patentinhaber: **Hella KG Hueck & Co.**
**59552 Lippstadt (DE)**

(72) Erfinder:
• **Irle, Henning**
**59557 Lippstadt (DE)**
• **Kost, Norbert**
**59590 Geseke (DE)**
• **Schmidt, Franz-Josef**
**33154 Salzkotten (DE)**

(56) Entgegenhaltungen:
**EP-A- 0 320 596         EP-A- 0 554 900**
**EP-B- 0 760 087         EP-B- 0 862 727**
**DE-A- 3 218 101         US-A- 4 450 403**
**US-A- 4 737 698         US-A- 5 028 745**

**Beschreibung**

Die Erfindung betrifft einen induktiven Winkelsensor mit einem Statorelement, welches eine mit einer periodischen Wechselspannung beaufschlagte Erregerspule sowie mehrere um einen vorgegebenen Winkelbetrag gegeneinander versetzt angeordnete Empfangsspulen aufweist, mit einem Rotorelement, welches gegenüber dem Statorelement beweglich angeordnet ist und durch ein induktives Koppelelement in Abhängigkeit von seiner relativen Position zum Statorelement die induktive Kopplung zwischen Erregerspule und Empfangsspulen vorgibt, und einer Auswerteschaltung, die aus den Ausgangssignalen der Empfangsspulen die Position des Rotorelementes bestimmt, sowie ein Verfahren zur Auswertung der Position des Rotorelementes.

Bei einem solchen Winkelsensor erzeugt jede Empfangsspule ein Ausgangssignal, welches im wesentlichen sinusförmig von der Position des Rotorelementes abhängt. Ein derartiger Winkelsensor ist aus der EP 0 554 900 A1 bekannt.

Soll nun ein linearer Zusammenhang zwischen den Ausgangssignalen der Empfangsspulen und der Position des Rotorelementes hergestellt werden, so gestaltet sich die Signalverarbeitung als recht aufwendig, oder es ist mit einer reduzierten Meßgenauigkeit zu rechnen.

Aus der US 4,450,403 und der DE 32 18 101 A1 sind optische oder magnetische Sensoren bekannt, die neben den Ausgangssignalen der Empfänger auch noch die Ausgangssignale mit invertierter Polarität verwenden.

Es ist die Aufgabe der Erfindung, einen induktiven Winkelsensor zu schaffen, der eine erhöhte Messgenauigkeit aufweist.

Diese Aufgabe wird durch die kennzeichnenden Merkmale des Anspruches 1 sowie durch die abhängigen Verfahrensansprüche gelöst.

Wie bereits angedeutet, erzeugt eine Positionsveränderung des Rotorelementes in den Empfangsspulen Ausgangssignale, deren Werte (z. B. Spannungswerte) im wesentlichen sinusförmig von der Position des Rotorelementes abhängen. Um nun auf einfache Weise einen linearen Zusammenhang zwischen der Position des Rotorelementes und dem Sensorausgangssignal herzustellen, ist der erfindungsgemäße Winkelsensor so ausgestaltet, daß dessen Auswerteschaltung jeweils den annähernd linearen Bereich um den Nulldurchgang der Sinusfunktion zur Auswertung heranzieht.

Da mehrere um einen vorgegebenen Winkelbetrag gegeneinander versetzt angeordnete Empfangsspulen vorgesehen sind, besitzt die Auswerteschaltung eine Auswahleinrichtung, welche jeweils die Ausgangssignale der Empfangsspulen auswählt, welche gerade den Bereich des Nulldurchgangs der Sinusfunktion durchlaufen.

Der gesamte Meßbereich des erfindungsgemäßen Winkelsensors wird so in mehrere Meßabschnitte unterteilt, in denen sich jeweils das Ausgangssignal zwischen einem unteren Signalwert und einem oberen Signalwert annähernd linear verändert.

Der untere und der obere Signalwert sind dabei für jeden Meßabschnitt gleich, so daß vorteilhafterweise die Elemente der Auswerteschaltung, insbesondere ein zur Auswertung vorgesehener Analog-Digital-Wandler, genau für diesen Bereich von Ausgangssignalen ausgelegt sein kann.

Die besonders hohe Meßgenauigkeit des erfindungsgemäßen Winkelsensors wird dadurch erreicht, daß der gesamte Meßbereich in eine Vielzahl von Meßabschnitten unterteilt wird.

Dabei werden neben den Empfangsspulenausgangssignalen auch die invertierten, d. h. umgepolten, Empfangsspulenausgangssignale zur Auswertung heran herangezogen. Die Anzahl der Meßabschnitte ist in diesem Fall gleich der doppelten Anzahl der Empfangsspulen.

Hierzu ist es allerdings erforderlich, eine ungerade Anzahl von Empfangsspulen vorzusehen, da bei einer geraden Anzahl von Empfangsspulen die invertierten Empfangsspulensignale jeweils paarweise mit den ursprünglichen Empfangsspulensignalen identisch sind und die Anzahl der Meßabschnitte somit nicht doppelt, sondern nur gleich groß der Anzahl der Empfangsspulen ist.

Zur Auswerteschaltung gehört neben der Auswahleinrichtung auch ein Gleichrichter, welcher die Aufgabe hat, den hochfrequenten Wechselspannungsanteil der Empfangsspulensignale, der durch das von der Erregerspule angekoppelte Signal stammt, herauszufiltern. Das sinusförmige, positionsabhängige Ausgangssignal ergibt sich daraus als Hüllkurve des ursprünglichen Empfangsspulensignals. Sowohl der Gleichrichter als auch die Umschalteinrichtung können dabei besonders einfach und vorteilhaft durch Analogschalter realisiert werden.

Weiterhin ist es vorteilhaft, jeweils einen Anschluß der Empfangsspulen mit einem gemeinsamen Summenpunkt zu verbinden. Da hierdurch jeweils eine Anschlußleitung zur Auswerteschaltung eingespart werden kann, kann so bei gleicher Empfangsspulendichte die Anzahl der Empfangsspulen vergrößert werden, wodurch die Anzahl der Meßabschnitte, und damit die Genauigkeit des Sensorausgangssignals, weiter erhöht werden kann.

Ebenfalls vorteilhaft ist es, einen Analog-Digital-Wandler sowie einen Mikrocomputer vorzusehen. Letzterer berechnet einerseits das Sensorausgangssignal des Winkelsensors und steuert andererseits auf der Grundlage der Werte der ihm zugeführten digitalisierten Ausgangssignale die Auswahleinrichtung, und zwar indem er das jeweils betragsmäßig kleinste Ausgangssignal mit positivem Anstieg für eine vorgegebene Bewegungsrichtung des Rotorelementes auf den Analog-Digital-Wandler schaltet.

Die Reihenfolge der hierzu auszuwählenden Ausgangssignale ist für jede Bewegungsrichtung des Rotorelementes vorgegeben und variiert jeweils zyklisch.

Besonders vorteilhaft ist es zudem, zur Auswertung, zwei in der Reihenfolge benachbarte Ausgangssignalwerte auszuwählen und eine Verhältnisbildung vorzunehmen. Hierdurch können auf einfache Weise Ungenauigkeiten im Sensorausgangssignal, welche durch Toleranzen in der Anordnung von Erregerspule und Empfangsspulen zueinander (Distanzschwankungen, Winkelversatz) bewirkt werden, gut kompensiert werden.

Im folgenden sei ein Ausführungsbeispiel eines erfindungsgemäßen Winkelsensors sowie das durch den Winkelsensor auszuführende Ausweerteverfahren anhand der Zeichnung dargestellt und näher erläutert.

Es zeigen:

Figur 1 eine Skizze der Empfangsspulenanordnung und der Auswerteschaltung;

Figur 2 eine Skizze der an der Auswahleinrichtung anliegenden Empfangsspulenausgangssignale sowie der invertierten Empfangsspulenausgangssignale;

Figur 3 eine Skizze zum allgemeinen Funktionsprinzip eines induktiven Winkelsensors.

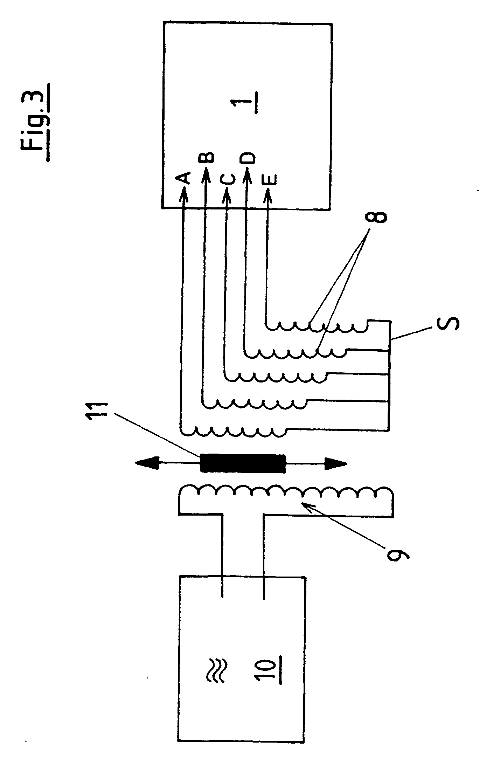

Zunächst sei das allgemeine Funktionsprinzip einer möglichen Ausführungsform eines induktiven Winkelsensors anhand der Figur 3 erläutert.

Auf einem nicht dargestellten Statorelement sind eine Erregerspule (9) sowie mehrere, hier beispielhaft fünf, Empfangsspulen (8) angeordnet. Die Empfangsspulen (8) sind dabei gegeneinander versetzt angeordnet, und zwar bei der tatsächlichen Ausführungsform um einen vorgegebenen Winkelbetrag gleichmäßig über den Meßbereich. Die hier nebeneinander gezeichneten Empfangsspulen (8) sind z. B. auf einer mehrlagigen Leiterplatte aufgebracht und als um die Umfangsrichtung eines Kreises gewundene Leiterbahnen ausgeführt.

Jeweils ein Anschluß jeder Empfangsspule ist mit einem gemeinsamen Summenpunkt (S), der andere Anschluß jeweils mit einem Eingang der Auswerteschaltung (1) verbunden.

Ein Oszillator (10) beaufschlagt die Erregerspule (9) mit einem hochfrequenten Wechselspannungssignal, welches über ein zu einem nicht dargestellten Rotorelement gehörenden induktiven Koppelelement (11) in die Empfangsspulen (8) eingekoppelt wird.

Durch den Versatz der Empfangsspulen (8) gegeneinander liegen an der Auswerteschaltung (1) verschiedene Ausgangssignale (A bis E) der Empfangsspulen an, aus welchen die Auswerteschaltung (1) die Position des Rotorelementes bzw. des induktiven Koppelelementes (11) relativ zum Statorelement bestimmt.

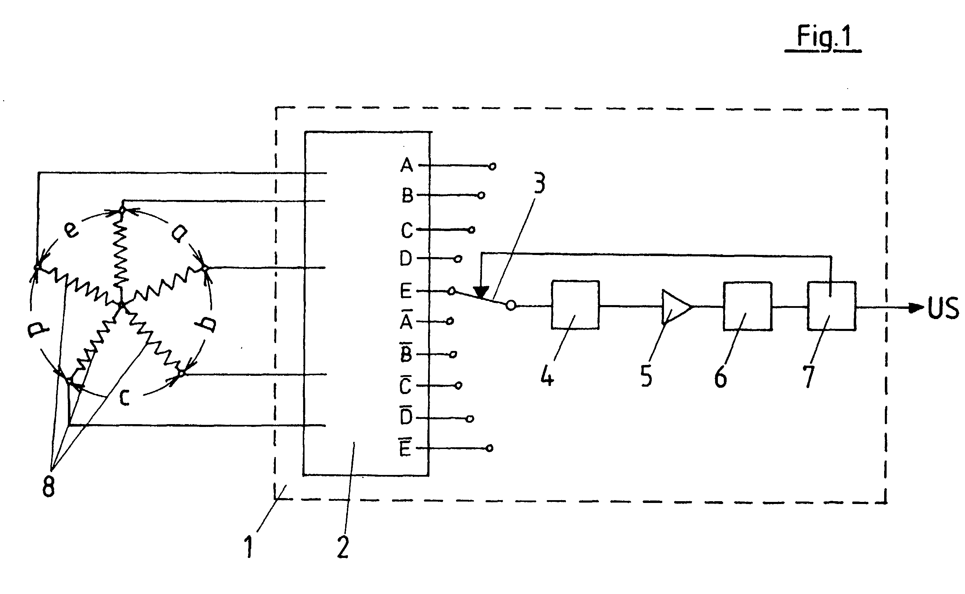

Anhand der Figur 1 wird das Aufbauprinzip der Auswerteschaltung genauer dargestellt.

Die Figur 1 zeigt die Anordnung der fünf Empfangsspulen (8) weniger in geometrischer als in elektrischer Hinsicht. Durch die gleichmäßige Anordnung der fünf Empfangsspulen über den Meßbereich sind die in den Empfangsspulen induzierten Spannungen, wie auch die zwischen den Spulen abgreifbaren Leiterspannungen (a, b, c, d, e), zueinander jeweils um 72° phasenverschoben. Dies ist vergleichbar der Spulenanordnung eines Fünf-Phasen-Wechselspannungsgenerators mit dem Summenpunkt (S) als Sternpunkt. Der geometrische Winkelversatz zwischen den Empfangsspulen beträgt dabei nicht notwendigerweise 72°, da die Spulenanordnung zur Erfassung eines Teilabschnittes eines Kreises vorgesehen sein kann.

Die Leiterspannungen (a bis e) werden dem zur Auswerteschaltung (1) gehörenden Gleichrichter (2) zugeführt. Durch Gleichrichtung, vorteilhafterweise durch besonders linear arbeitende Analogschalter, wird der hochfrequente Anteil der Empfangsspulensignale eliminiert. Die verbleibenden Empfangsspulenausgangssignale (A bis E) entsprechen damit den Hüllkurven der Leiterspannungen (a bis e) und enthalten lediglich die sinusförmige Abhängigkeit von der Position des nicht dargestellten Rotorelementes.

Die Ausgangssignale (A bis E) sowie die elektrisch invertierten (umgepolten) Ausgangssignale ($\bar{A}$ bis $\bar{E}$) werden einer steuerbaren Auswahleinrichtung (3) zugeführt, die technisch ebenfalls durch Analogschalter realisierbar ist und in der Figur 1, schematisch vereinfacht, durch einen Umschalter dargestellt wird. Jeweils eines der Ausgangssignale (A bis E) bzw. der invertierten Ausgangssignale ($\bar{A}$ bis $\bar{E}$) wird durch die Auswahleinrichtung über einen HF-Filter (4), welcher eventuell verbliebene Hochfrequenzanteile der Ausgangssignale beseitigt, und über einen Verstärker (5) auf einen Analog-Digital-Wandler (6) geschaltet Der Verstärker (5) hat dabei insbesondere die Aufgabe, den Pegel der Ausgangssignale an den Wandlungsbereich des Analog-Digital-Wandlers (6) anzupassen. Der Analog-Digital-Wandler (6) wiederum gibt sein digitalisiertes Ausgangssignal an den Mikrocomputer (7), welcher erstens das der Position des Rotorelementes entsprechende Sensorausgangssignal berechnet und ausgibt und weiterhin die Auswahleinrichtung (3) steuert, weiter. Der Mikrocomputer (7) gibt dabei insbesondere vor, welches der Ausgangssignale (A bis E) bzw. invertierten Ausgangssignale ($\bar{A}$ bis $\bar{E}$) jeweils zur Auswertung gelangen.

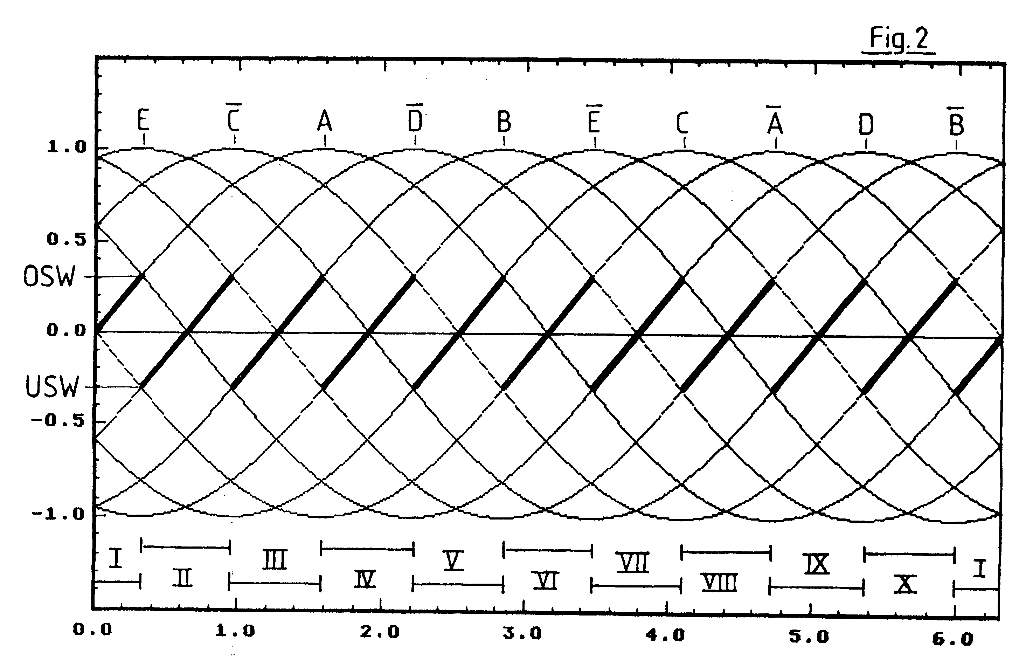

Das der Erfindung zugrundeliegende Auswerteprinzip soll im folgenden unter Zuhilfenahme der Figur 2 näher erläutert werden.

Die Figur 2 zeigt qualitativ den Verlauf der an der Auswahleinrichtung (3) anliegenden Ausgangssignale (A bis E) bzw. der invertierten Ausgangssignale ($\bar{A}$ bis $\bar{E}$). Aufgetragen ist die Phasenlage der einzelnen Signale zueinander, wobei die Abszisse in Bogenmaßeinheiten gekennzeichnet ist. Der Verlauf der Ausgangssignale ist hier dimensionslos im Wertebereich der Sinusfunktion dargestellt und für eine konkrete Realisierung mit einem Spannungswert zu multiplizieren.

Vorgehoben dargestellt sind die Abschnitte derjenigen Sinuskurven mit den betragskleinsten ansteigenden Werten. Hierdurch erhält man über den Meßbereich 10 gleichartige linear ansteigende Meßabschnitte (I bis X), welche die Auswerteschaltung zur Positionsbestimmung verwendet.

Jeder Meßabschnitt (I bis X) läuft von einem unteren Signalwert (USW) bis zu einem oberen Signalwert (OSW), welcher für jeden Meßabschnitt gleich groß ist. Dies ist vorteilhaft, da so der Verstärkungsfaktor des in der Figur 1 dargestellten Verstärkers (5) so gewählt werden kann, daß die Signaldifferenz (UB) zwischen dem oberen Signalwert und dem unteren Signalwert mal dem Verstärkungsfaktor genau dem Wandlungsbereich des Analog-Digital-Wandlers (7) entspricht, so daß dieser in jedem Meßabschnitt seine bestmögliche Auflösung erreicht.

Das Ausgangssignal, welches dem Analog-Digital-Wandler (7) zugeführt wird, und damit auch dessen digitalisiertes Ausgangssignal, ist ein Maß dafür, an welcher Stelle innerhalb eines beliebigen Meßabschnittes (I bis X) sich die zu ermittelnde Position befindet. Um die genaue Gesamtposition zu ermitteln, muß nun nur noch die Anzahl der bereits durchlaufenden Meßabschnitte n hinzuaddiert werden.

Da der Mikrocomputer (7) jeweils beim Erreichen des oberen Signalwertes auf das zum nächsten Meßabschnitt gehörende Ausgangssignal weiterschaltet bzw. entsprechend beim Erreichen des unteren Signalwertes auf das zum vorhergehenden Meßabschnitt gehörende Ausgangssignal zurückschaltet, zählt diese einfach die Anzahl der durchlaufenen Meßabschnitte anhand der vorgenommenen Umschaltungen.

Ein der Position des Rotorelementes entsprechendes Sensorausgangssignal ($U_S$) kann der Mikrocomputer leicht berechnen durch Multiplikation der Anzahl der durchlaufenen Meßabschnitte n mit der Signaldifferenz ($U_B$) jedes Meßbereiches ($U_B$ = OSW - USW) plus dem gemessenen Signalwert ($U_n$) in dem gerade erfaßten Meßabschnitt.

Auf diese einfache Weise erhält man ein Sensorausgangssignal, welches nahezu linear von der Position des Rotorelementes abhängt. Ein besonderer Vorteil hierbei ist zudem, daß durch die Unterteilung des Meßbereiches in Meßabschnitte die Genauigkeit der Positionserfassung, welche ansonsten durch die Genauigkeit des Analog-Digital-Wandlers begrenzt wird, sich um den Faktor der Anzahl der Unterteilungen steigern läßt.

**Patentansprüche**

1. Induktiver Winkelsensor mit einem Statorelement, welches eine mit einer periodischen Wechselspannung beaufschlagte Erregerspule (9) sowie mehrere um einen vorgegebenen Winkelbetrag gegeneinander versetzt angeordnete Empfangsspulen (8) aufweist, mit einem Rotorelement, welches gegenüber dem Statorelement beweglich angeordnet ist und durch ein induktives Koppelelement (11) in Abhängigkeit von seiner relativen Position zum Statorelement die induktive Kopplung zwischen Erregerspule (9) und Empfangsspulen (8) vorgibt, und einer Auswerteschaltung (1), die aus den Ausgangssignalen (A, B, C, D, E) der Empfarigsspulen (8) die Position des Rotorelementes bestimmt,
**dadurch gekennzeichnet, daß**

- die Auswerteschaltung (1) eine Auswahleinrichtung (3) aufweist, die in Abhängigkeit von den momentanen Werten der Ausgangssignale (A bis E) mindestens eines der Ausgangssignale (A bis E) auswählt, und wobei die Auswerteschaltung (1) aus dem/den Wert(en) des mindestens einen ausgewählten Ausgangssignals die momentane Position des Rotorelementes bestimmt.
- die Empfangsspulen auf dem Statorelement gleichmäßig über den Meßbereich verteilt angeordnet sind,
- der Winkelsensor eine ungerade Anzahl von Empfangsspulen (8) aufweist,
- die Auswerteschaltung (1) zusätzlich zu den Ausgangssignalen (A bis E) der Empfangsspulen (8) jeweils die Ausgangssignale mit invertierter Polarität ($\bar{A}$, $\bar{B}$, $\bar{C}$, $\bar{D}$, $\bar{E}$) der Auswahleinrichtung (3) zuführt.

2. Induktiver Winkelsensor nach Anspruch 1, **dadurch gekennzeichnet, daß** die Auswerteschaltung (1) einen Gleichrichter (2) zur Eliminierung des durch die Erregerspule (9) eingekoppelten hochfrequenten Wechselspannungsanteils aus den Empfangsspulensignalen (A bis E) aufweist und daß sowohl der Gleichrichter (2) als auch die Auswahleinrichtung (3) durch Analog-Schalter ausgebildet sind.

3. Induktiver Winkelsensor nach Anspruch 1 oder 2, **dadurch gekennzeichnet, daß** jeweils ein Anschluß jeder Empfangsspule (8) zu einem gemeinsamen Summenpunkt (S) und der jeweils andere Anschluß zur Auswerteschaltung (1) geführt ist und daß die Auswerteschaltung (1) jeweils die Leiterspannung zwischen zwei Empfangsspulen (8) auswertet.

4. Induktiver Winkelsensor nach Anspruch 1, 2 oder 3, **dadurch gekennzeichnet, daß** die Auswerteschaltung (1) einen Analog-Digital-Wandler (6) aufweist, der das durch die Auswahleinrichtung (3) ausgewählte Ausgangssignal (A bis E, $\bar{A}$ bis $\bar{E}$) digitalisiert und einem Mikrocomputer (7) zuführt, und daß der Mikrocomputer (7) unter Heranziehung der digitalisierten Ausgangssignale die Auswahleinrichtung (3) steuert.

5. Verfahren zur Auswertung der Position des Rotorelementes eines induktiven Winkelsensors nach einem der Ansprüche 1 bis 4, **dadurch gekennzeichnet, daß** der Mikrocomputer (7) durch Steuerung der Auswahleinrichtung (3) jeweils das betragsmäßig kleinste Ausgangssignal (A bis E, $\bar{A}$ bis $\bar{E}$) mit positivem Anstieg bei einer vorgegebenen Drehrichtung des Rotorelementes zur Auswertung auswählt.

6. Auswerteverfahren nach Anspruch 5, **dadurch gekennzeichnet, daß** der Mikrocomputer (7) die Ausgangssignale (A bis E, $\bar{A}$ bis $\bar{E}$) in einer vorgegebenen zyklischen Reihenfolge auswählt.

7. Auswerteverfahren nach Anspruch 5 oder 6, **dadurch gekennzeichnet, daß** der Gesamtmeßbereich des Winkelsensors in 2N Meßabschnitte (I bis X) (mit N = ungerade Anzahl der Empfangsspulen) unterteilt ist, daß sich das ausgewählte Ausgangssignal in jedem Meßabschnitt (I bis X) um die Signaldifferenz ($U_B$) ändert, daß der digitalisierte Ausgangswert des Analog-Digital-Wandlers (6) dem gemessenen Ausgangssignalwert ($U_n$) im gerade erfaßten Meßbereich (n) entspricht und daß der Mikrocomputer (7) das Sensorausgangssignal ($U_S$) des Winkelsensors berechnet nach $U_S = U_B \cdot n + U_n$.

8. Auswerteverfahren nach den Ansprüchen 5 bis 7, **dadurch gekennzeichnet, daß** die Auswahleinrichtung (3) ein zweites, zum betragsmäßig kleinsten ersten Ausgangssignal in der Reihenfolge benachbartes Ausgangssignal auswählt und daß der Mikrocomputer (7) hieraus einen normierten Ausgangssignalwert $U_n$ im gerade erfaßten Meßbereich n nach der Vorschrift $U_n$ = erster Ausgangssignalwert (erster Ausgangssignalwert plus zweiter Ausgangssignalwert) berechnet.

## Claims

1. Inductive angle sensor with a stator element, that has an exciter coil (9) that has a cyclical, alternating voltage applied to it, and several receiving coils (8) disposed shifted in relation to each other by a set angle, with a rotor element that can move in relation to the stator element and which, by means of an inductive coupling element (11), presupposes the inductive coupling between the exciter coil (9) and receiver coils (8) on the basis of its position relative to the stator element, and an analysis circuit (1) that determines the position of the rotor element from the output signals (A, B, C, D, E) of the receiving coils (8),

   **characterized in that**,

   - the analysis circuit (1) has a selection device (3) that selects at least one of the output signals (A to E) on the basis of the values of the moment of the output signals (A to E), and whereby the analysis circuit (1) determines the position of the moment of the rotor element from the value or values of the at least one selected output signal,
   - the receiving coils are distributed on the stator element uniformly over the measurable range,
   - the angle sensor has an odd number of receiving coils (8),
   - in addition to the output signals (A to E) of the receiving coils (8), the analysis circuit (1) in each case supplies the output signals with inverted polarity (A, B, C, D, E) to the selection device (3).

2. Inductive angle sensor in accordance with claim 1, **characterized in that** the analysis circuit (1) has a rectifier (2) for eliminating the high-frequency alternating voltage portion from the receiving coil signals (A to E), coupled in by the exciter coil (9), and that both the rectifier (2) and the selection device (3) are formed by an analog circuit.

3. Inductive angle sensor in accordance with claim 1 or 2, **characterized in that** in each case one connection of each receiving coil (8) goes to a common summation point (S) and the given other connection goes to the analysis circuit (1), and **in that** the analysis circuit (1) in each case analyzes the voltage between two receiving coils (8).

4. Inductive angle sensor in accordance with claim 1, 2 or 3, **characterized in that** the analysis circuit (1) has an analog/digital converter that digitalizes the output signal (A to E, A to E) selected by the selection device (3) and supplies it to a microcomputer (7), and **in that** the microcomputer (7) controls the selection device (3) with use of the digitalized output signals.

5. Process for analyzing the position of the rotor element of an inductive angle sensor in accordance with one of the claims 1 to 4, **characterized in that** the microcomputer (7) in each case selects, through control of the selection device (3), the smallest output signal (A to E, A to E) with a positive rise for a given direction of rotation of the rotor element, for analysis.

**6.** Process of analysis in accordance with claim 5, **characterized in that** the microcomputer (7) selects the output signals (A to E, A to E) in a set cyclic sequence.

**7.** Process of analysis in accordance with claim 5 or 6, **characterized in that** the overall measuring range of the angle sensor is divided up into 2N measurement sections (I to X) (where N = the odd number of receiving coils), **in that** the selected output signal changes in each measuring section (I to X) by the signal difference $(U_B)$, **in that** the digitalized output value of the analog/digital converter (6) corresponds to the measured value of the output signal $(U_n)$ in the measuring range (n) that has just been recorded and **in that** the microcomputer (7) calculates the sensor output signal $(U_S)$ of the angle sensor on the basis of the formula $U_S = U_B \times n + U_n$.

**8.** Process of analysis in accordance with claims 5 to 7, **characterized in that** the selection device (3) selects a second output signal adjacent, in the sequence of output signals, to the smallest, first output signal, and **in that** the microcomputer (7) calculates a standardized output signal value $U_n$, in the measuring range n that has just been recorded, in accordance with the formula $U_n$ = first output signal value (first output signal value plus the second output signal value).

## Revendications

**1.** Capteur inductif de position angulaire comportant un élément formant stator, qui possède une bobine d'excitation (9), qui est chargée avec une tension alternative périodique, ainsi que plusieurs bobines de réception (8), qui sont décalées les unes par rapport aux autres d'une valeur angulaire absolue prédéterminée, un élément formant rotor, qui est disposé de manière à être déplaçable par rapport à l'élément formant stator et prédétermine le couplage inductif entre la bobine d'excitation (9) et les bobines de réception (8) au moyen d'un élément de couplage inductif (11) en fonction de sa position relative par rapport à l'élément formant stator, et un circuit d'évaluation (1), qui détermine la position de l'élément formant rotor à partir des signaux de sortie (A, B, C, D, E) des bobines de réception (8), **caractérisé en ce que**

- le circuit d'évaluation (1) possède un dispositif de sélection (3), qui, en fonction des valeurs instantanées des signaux de sortie (A à E) sélectionne au moins l'un des signaux de sortie (A à E), et dans lequel le circuit d'évaluation (1) détermine la position instantanée de l'élément de retard à partir de la / des valeurs du au moins un signal de sortie sélectionné,

- les bobines de réception sont disposées sur l'élément formant stator en étant disposées d'une manière répartie de façon uniforme dans la plage de mesure,
- le capteur de position angulaire comportant un nombre impair de bobines de réception (8),
- le circuit d'évaluation (1) envoie en plus des signaux de sortie (A à E) des bobines de réception (8), respectivement les signaux de sortie possédant une polarité inversée ($\bar{A}$, $\bar{B}$, $\bar{C}$, $\bar{D}$, $\bar{E}$) du dispositif de sélection (3).

**2.** Capteur inductif de position angulaire selon la revendication 1, **caractérisé en ce que** le circuit d'évaluation (1) possède un redresseur (2) servant à éliminer la composante de tension alternative à haute fréquence injectée par la bobine d'excitation (9), à partir des signaux (A à E) des bobines de réception et qu'aussi bien le redresseur (2) que le dispositif de sélection (3) sont formés par des commutateurs analogiques.

**3.** Capteur inductif de position angulaire selon la revendication 1 ou 2, **caractérisé en ce que** respectivement une borne de chaque bobine de réception (8) est raccordée à un point commun de sommation (S) et que l'autre borne respective est raccordée au circuit d'évaluation (1) et que le circuit d'évaluation (1) évalue respectivement la tension de conducteur entre deux bobines de réception (8).

**4.** Capteur inductif de position angulaire selon la revendication 1, 2 ou 3, **caractérisé en ce que** le circuit d'évaluation (1) possède un convertisseur analogique / numérique (6), qui numérise le signal de sortie (A à E, A à E) sélectionné par le dispositif de sélection (3) et un micro-ordinateur (7), et que le micro-ordinateur (7) commande le dispositif de sélection (3) en utilisant les signaux de sortie numérisés.

**5.** Procédé pour évaluer la position de l'élément formant rotor d'un capteur inductif de position angulaire selon l'une des revendications 1 à 4, **caractérisé en ce que** le micro-ordinateur (7) sélectionne, au moyen de la commande du dispositif de sélection (3), respectivement le signal de sortie le plus petit en valeur absolue (A à E, A à E) avec un accroissement positif dans le cas d'une rotation prédéterminée de l'élément formant rotor pour la sélection.

**6.** Procédé d'évaluation selon la revendication 5, **caractérisé en ce que** le micro-ordinateur (7) sélectionne les signaux de sortie (A à E, $\bar{A}$ à $\bar{E}$) selon une séquence cyclique prédéterminée.

7. Procédé d'évaluation selon la revendication 5 ou 6, **caractérisé en ce que** la plage de mesure totale du capteur angulaire est divisé en 2 N sections de mesure (I à X) (avec N = nombre impair des bobines de réception), que le signal de sortie sélectionné varie de la différence de signal ($U_B$), dans chaque section de mesure (I à X), que la valeur de sortie numérisée du convertisseur analogique / numérique (6) correspond à la valeur mesurée du signal de sortie ($U_n$) dans la plage de mesure précisément détectée (n) et que le micro-ordinateur (7) calcule le signal de sortie ($U_S$) du capteur de position angulaire conformément à $U_S = U_B \cdot n + U_n$.

8. Procédé d'évaluation selon les revendications 5 à 7, **caractérisé en ce que** le dispositif de sélection (3) sélectionne un second signal de sortie qui est voisin, dans la succession, du premier signal de sortie le plus petit en valeur absolue, et que le micro-ordinateur (7) calcule à partir de là une valeur normalisée ($U_n$) du signal de sortie dans la plage de mesure précisément détectée n conformément à la prescription $U_n$ = première valeur du signal de sortie (première valeur du signal de sortie plus deuxième valeur du signal de sortie).

Fig.1

EP 0 900 998 B1

Fig.2

EP 0 900 998 B1

Fig.3

EP 0 900 998 B1